# EUROPÄISCHE PATENTSCHRIFT

(11) **EP 1 666 764 B1**
(45) Veröffentlichungstag und Bekanntmachung des Hinweises auf die Patenterteilung: **09.11.2011**
(21) Anmeldenummer: 06004972.3
(22) Anmeldetag: 15.07.2004
(51) Int. Cl.: F16F 15/131, F16D 13/70

(54) **Drehschwingungsdämpfer**
Torsional vibration damper
Amortisseur de vibrations en torsion

(30) Priorität: 28.07.2003 DE 10334314
(43) Veröffentlichungstag der Anmeldung: 07.06.2006
(62) Teilanmeldung aus: 04016646.4
(73) Patentinhaber: Schaeffler Technologies GmbH & Co. KG, 91074 Herzogenaurach (DE)
(72) Erfinder: Jäckel, Johann, 77830 Bühlertal (DE); Zhou, Bin, 77815 Bühl (DE); Littlefair, Greig, 77815 Bühl (DE); Schwederle, Philippe, 67000 Strasbourg (FR)

(56) Entgegenhaltungen:
- EP-A- 1 122 461
- DE-U1- 8 509 183
- FR-A- 2 819 870
- US-A- 5 476 166
- US-A- 5 697 481

## Beschreibung

Die Erfindung betrifft einen Drehschwingungsdämpfer mit einer Kupplung, insbesondere ein geteiltes Schwungrad, mit einer primären Schwungmasse, die mit der Abtriebswelle einer Brennkraftmaschine koppelbar ist, und mit einer sekundären Schwungmasse, welche die Gegendruckplatte der Kupplung bildet, die einen Kupplungsdeckel, eine Druckplatte und eine Kupplungsscheibe aufweist, die zwischen der Gegendruckplatte und der Druckplatte einklemmbar ist, die relativ zum Kupplungsdeckel in axialer Richtung bewegbar und mit einer Getriebeeingangswelle koppelbar ist.

Derartige Drehschwingungsdämpfer mit Kupplung sind durch die US 5,476,166, die US 5,697,481 und die FR 2 819 870 bekannt geworden. Durch die DE 85 09 183 U1 ist eine Kupplung bekannt, die über eine axiale Steckverbindung und einen Sprengring mit einem Schwungrad axial und drehfest verbunden ist.
Durch die US 5,476,166 ist ein Drehschwingungsdämpfer nach dem Oberbegriff des Anspruchs 1 bekannt.

Aufgabe der Erfindung ist es, einen Drehschwingungsdämpfer, insbesondere ein geteiltes Schwungrad, mit einer primären Schwungmasse, die mit der Abtriebswelle einer Brennkraftmaschine koppelbar ist, und mit einer sekundären Schwungmasse, welche die Gegendruckplatte einer Kupplung bildet, die eine Kupplungsscheibe aufweist, die zwischen der Gegendruckplatte und einer Druckplatte einklemmbar ist, die relativ zu einem Kupplungsdeckel in axialer Richtung bewegbar und mit einer Getriebeeingangswelle koppelbar ist, zu schaffen, der einfach aufgebaut, kostengünstig herstellbar und einfach zu montieren ist.

Die Aufgabe wird bei einem Drehschwingungsdämpfer der eingangs genannten Art **dadurch gelöst, dass** an einem Umfangsrand des Kupplungsdeckels radial innen mindestens eine Erhöhung ausgebildet ist, die im zusammengebauten Zustand in eine Vertiefung eingreift, die radial außen an der Gegendruckplatte ausgebildet ist, wobei an der Gegendruckplatte und am Kupplungsdeckel Löcher zur Aufnahme von Befestigungsmittel vorgesehen sind. Dadurch wird die Positionierung und Befestigung des Kupplungsdeckels relativ zu der Gegendruckplatte bei der Montage vereinfacht. Die Vertiefung kann gegossen oder nachträglich spanend, z. B. durch Bohren, erzeugt werden.

Ein erfindungsgemäßer Drehschwingungsdämpfer, wie in Anspruch 1 definiert, ist zusätzlich **dadurch gekennzeichnet, dass** an dem Kupplungsdeckel radial außen eine umlaufenden Vorzentrierstufe ausgebildet ist, die bei der Montage teilweise an der Gegendruckplatte zur Anlage kommt. Dadurch wird bei der Montage eine Vorzentrierung des Kupplungsdeckels relativ zu der Sekundärschwungmasse gewährleistet.

Vorteilhaft kann es sein, wenn sich mindestens eines der Löcher in einem Zapfen fortsetzt, der von der Gegendruckplatte In ein Durchgangsloch ragt, das in dem Kupplungsdeckel zur Aufnahme der Befestigungsmittel vorgesehen ist Bei den Befestigungsmitteln kann es sich z. B. um Schrauben handeln, die mit ihrem Schaft durch die Durchgangslöcher in dem Kupplungsdeckel in die mit einem Gewinde versehenen Löcher in der Gegendruckplatte geschraubt werden. Die Zapfen ermöglichen eine Positionierung des Kupplungsdeckels relativ zu der Gegendruckplatte bei der Montage. Vorzugsweise sind maximal zwei Löcher mit einem Zapfen ausgestattet, um eine Überbestimmung zu verhindern. Die Schrauben sind vorzugsweise mit einem vergrößerten Kopf ausgestattet, um ein Übergreifen des Zapfens im eingebauten Zustand zu gewährleisten.

Weitere Vorteile, Merkmale und Einzelheiten der Erfindung sowie weitere mögliche Ausgestaltungen von Drehschwingungsdämpfern ergeben sich aus der nachfolgenden Beschreibung, in der unter Bezugnahme auf die Zeichnungen Ausführungsbeispieie im Einzelnen beschrieben sind.

Es zeigen:
- Figur 1.: eine Kupplung mit einem integrierten Drehschwingungsdämpfer gemäß einer Ausführungsform der Erfindung;
- Figur 2: eine vergrößerte Einzelheit aus Figur 1;
- Figur 3: die Ansicht eines Schnitts entlang der Linie VIII - VIII in Figur 2;
- Figur 4: eine vergrößerte Einzelheit aus Figur 1 gemäß einer weiteren Ausführungs- form;
- Figur 5: die Ansicht eines Schnitts entlang der Linie X-X in Figur 4;
- Figur 6: die Ansicht eines Schnitts entlang der Linie XI - XI in Figur 5;
- Figur 7: eine vergrößerte Einzelheit aus Figur 1 mit einem vergrößerten Schraubenkopf;
- Figur 8: eine vergrößerte Einzelheit aus Figur 1 gemäß einer weiteren Ausführungs- form;
- Figur 9: die Ansicht eines Schnitts entlang der Linie XIV - XIV in Figur 8;
- Figur 10: eine Kupplung mit einem integrierten Drehschwingungsdämpfer;
- Figur 11: eine Ansicht in Richtung des Pfeils XVI in Figur 10;
- Figur 12: die Ansicht eines Schnitts entlang der Linie XVII -XVII in Figur 11;
- Figur 13: die Ansicht eines Schnitts entlang der Linie XVIII - XVIII in Figur 12;
- Figur 14: die gleiche Ansicht wie in Figur 12 beim Positionieren;
- Figur 15: die Ansicht eines Schnitts entlang der Linie XX - XX in Figur 14;
- Figuren 16 und 17: die gleichen Ansichten wie in Figur 12 und 13 im positionierten Zustand;
- Figur 18: eine vergrößerte Einzelheit aus Figur 10 gemäß einer weiteren nicht erfindungsgemäßen Ausführungs- form und
- Figur 19: die Ansicht eines Schnitts entlang der Linie XXIV - XXIV in Figur 18.

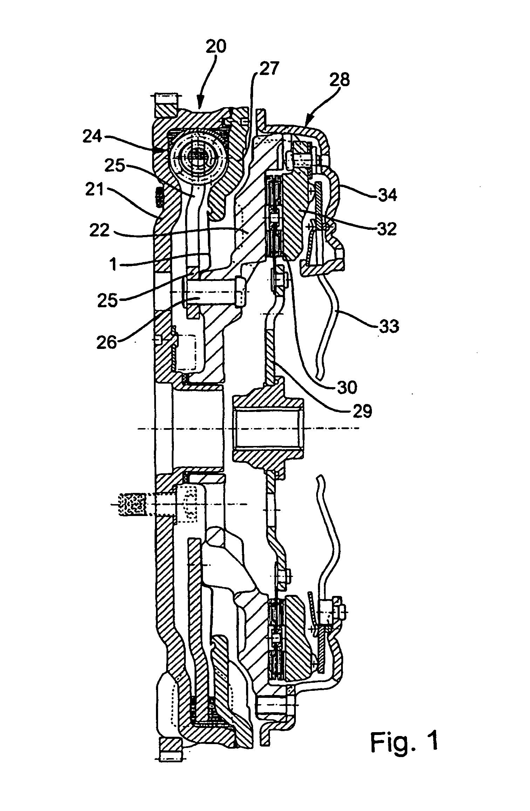

In Figur 1 ist ein Drehschwingungsdämpfer 20 dargestellt, der ein primäres Schwungrad 21 und ein sekundäres Schwungrad 22 umfasst. Die beiden Schwungräder 21 und 22, die auch als Schwungmassen bezeichnet werden, sind über mehrere in Umfangsrichtung verteilt angeordnete Energiespeicherelemente 24, die vorzugsweise von Schraubendruckfedern gebildet werden, miteinander gekoppelt. Das sekundäre Schwungrad 22 ist über einen Flansch 25, der durch Nietverbindungen 26 an dem sekundären Schwungrad 22 befestigt ist, mit diesem gekoppelt.

Die Dichtmembraneinrichtung 1 ist mit ihrem Innenkörper zwischen dem Flansch 25 und der sekundären Schwungmasse 22 eingespannt. Der Außenkörper der Dichtmembraneinrichtung 1 liegt mit seinem Außenrand an einem Ausläufer 27 der primären Schwungmasse 21 an. Der Außenkörper der Dichtmembraneinrichtung 1 ist im eingebauten Zustand leicht überdrückt, also aus dem entlasteten Zustand über seine Planlage hinaus gebogen beziehungsweise abgewinkelt.

Die sekundäre Schwungmasse 22 bildet die Gegendruckplatte einer Kupplung 28, die eine Kupplungsscheibe 29 mit Reibbelägen 30 umfasst. Die Reibbeläge 30 sind zwischen der Gegendruckplatte 22 und einer Druckplatte 32 angeordnet, die mit Hilfe einer Tellerfedereinrichtung 33 relativ zu einem Kupplungsdeckel 34 in axialer Richtung bewegbar ist, um die Reibbeläge 30 der Kupplungsscheibe 29 zwischen der Druckplatte 32 und der Gegendruckplatte 22 einzuspannen. Der Aufbau und die Funktion einer Kupplung mit integriertem Drehschwingungsdämpfer werden als bekannt vorausgesetzt und daher hier nicht weiter erläutert.

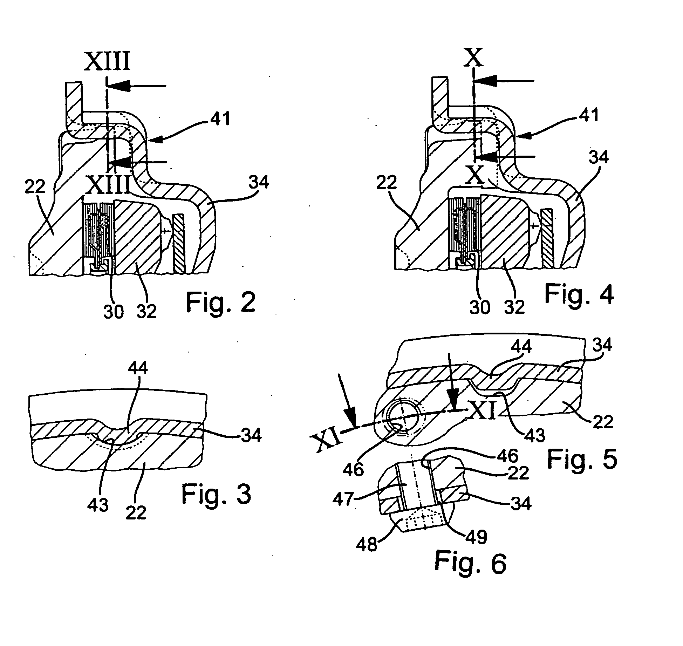

In Figur 2 ist ein vergrößerter Ausschnitt aus Figur 1 gemäß einer ersten Ausführungsform dargestellt. Wie man in Figur 2 sieht, ist an dem Kupplungsdeckel 34 eine Stufe 41 ausgebildet, die dazu dient, den Kupplungsdeckel 34 bei der Montage auf dem sekundären Schwungrad 22 vorzuzentrieren.

In der in Figur 3 dargestellten Schnittdarstellung sieht man, dass an dem Kupplungsdeckel 34 eine Erhöhung oder Ausstülpung 44 ausgebildet ist, die in eine Vertiefung 43 eingreift, die in dem sekundären Schwungrad 22 ausgebildet ist. Bei dem sekundären Schwungrad 22 handelt es sich vorzugsweise um ein Gussteil, in welchem die Vertiefung 43 mit Hilfe eines Bohrwerkzeugs erzeugt worden ist. Die Erhöhung 44 und die Vertiefung 43 ermöglichen das Positionieren des Kupplungsdeckels 34 relativ zu dem sekundären Schwungrad 22, so dass die Befestigungslöcher in den beiden Bauteilen konzentrisch zueinander angeordnet werden.

In Figur 4 ist ein ähnlicher Ausschnitt wie in Figur 2 gemäß einer weiteren Ausführungsform dargestellt. In der Schnittdarstellung der Figur 5 sieht man eine Vertiefung 43 in dem Sekundärschwungrad 22, die nicht durch Bohren, wie bei der in Figur 3 dargestellten Ausführungsform, sondern durch Gießen erzeugt wurde. Die darin eingreifende Erhöhung 44 in dem Kupplungsdeckel 34 weist ebenfalls eine geringfügig veränderte Form auf. Der Begriff Erhöhung in Verwendung mit dem Kupplungsdeckel 34 bezieht sich im Zusammenhang mit der vorliegenden Erfindung auf die innere Umfangsfläche des Kupplungsdeckels. Die Erhöhung 44 ragt von der inneren Umfangsfläche des Kupplungsdeckels 34 in radialer Richtung nach innen. Darüber hinaus sieht man in Figur 5, dass in dem Sekundärschwungrad 22 ein Verschraubungsloch 46 in, bezogen auf den Drehschwingungsdämpfer, axialer Richtung verläuft.

In Figur 6 ist in das Verschraubungsloch 46 in der sekundären Schwungmasse 22 ein Schraubenschaft 47 eingeschraubt, der einen vergrößerten Schraubenkopf 48 aufweist. Der Schraubenkopf 48 liegt radial außen an dem Kupplungsdeckel 34 an, der ein Durchgangsloch 49 aufweist, dessen Durchmesser größer als der des Verschraubungslochs 46 ist. Der Kupplungsdeckel 34 ist im eingebauten Zustand zwischen der Sekundärschwungmasse 22 und dem Schraubenkopf 48 eingespannt. In den Figuren 5 und 6 ist zwar nur eine Schraubverbindung dargestellt, in der Praxis ist der Kupplungsdeckel 34 jedoch mit einer Vielzahl solcher Schraubverbindungen, die in Umfangsrichtung vorzugsweise gleichmäßig verteilt angeordnet sind, an der Sekundärschwungmasse 22 befestigt.

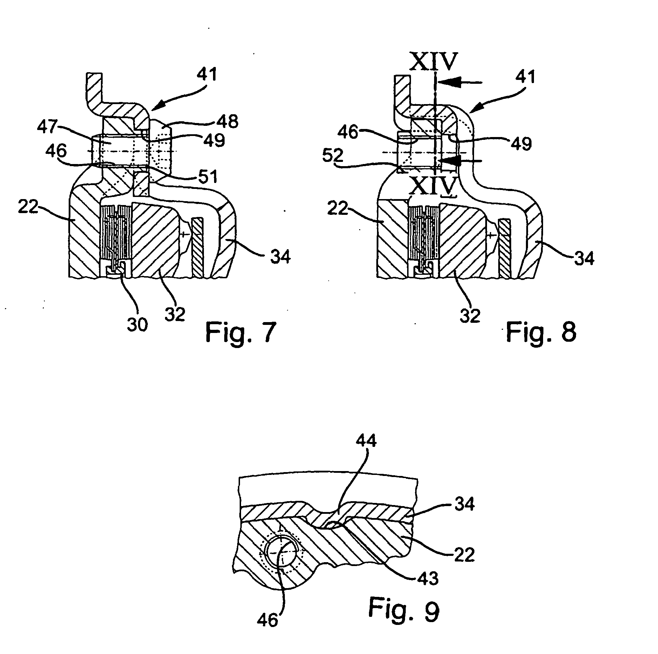

In Figur 7 ist ein weiterer Ausschnitt aus Figur 1 vergrößert dargestellt. Dort sieht man, dass in einem Schraubenloch 46 der Sekundärschwungmasse 22 ein Schraubenschaft 47 eingeschraubt ist, der einen vergrößerten Schraubenkopf 48 aufweist, der an dem Kupplungsdeckel 34 anliegt. Zwischen dem Schraubenschaft 47 und dem Durchgangsloch 49 in dem Kupplungsdeckel 34 ist ein Ringraum ausgebildet, in den ein Gewindezapfen 51 ragt, der an der sekundären Schwungmasse 22 ausgebildet ist. Der Gewindezapfen 51 dient dazu, den Kupplungsdeckel 34 bei der Montage bezüglich der Befestigungslöcher zu positionieren.

In Figur 8 sieht man, dass nicht an jedem Befestigungsloch ein Gewindezapfen 51 in das zugehörige Durchgangsloch 49 in den Deckel 34 ragt. Bei der in Figur 8 dargestellten Ausführungsform, die ein anderes Befestigungsloch als in Figur 7 zeigt, ist an der sekundären Schwungmasse 22 ein Gewindezapfen 52 ausgebildet, der nicht in das Durchgangsloch 49 des Kupplungsdeckels 34 ragt, sondern sich in die entgegengesetzte Richtung erstreckt. Dadurch wird eine Überbestimmung beim Positionieren des Kupplungsdeckels 34 relativ zu der sekundären Schwungmasse 22 vermieden.

In Figur 9 sieht man, dass die Positionierung zusätzlich oder alternativ auch durch Kerben 43, 44 am Umfang der sekundären Schwungscheibe 22 und des Kupplungsdeckels 34 erfolgen kann.

In den Figuren 1 bis 9 ist gezeigt, wie eine Kupplung durch ihren geschlossenen Kupplungsdeckel auf der Sekundärschwungscheibe mit Hilfe der zusätzlichen montagegerechten Vorzentrierstufe zentriert werden kann. Die Position des Verschraubungslochbildes am Umfang kann durch eine Kerbpaarung und/oder Gewindezapfen gewährleistet werden. Der geschlossene Kupplungsdeckel mit Kragen liefert ein zusätzliches Massenträgheitsmoment und Stabilität. Dadurch wird eine Massenreduzierung und der Einsatz von kostengünstigerem Gussmaterial ermöglicht, und zwar wegen der Unempfindlichkeit des Berstverhaltens. Durch die erfindungsgemäße Zentrierung und Positionierung können die herkömmlich verwendeten drei Stifte entfallen. Das Sekundärschwungrad ist vorzugsweise werkzeugfallend aus Metallblech gebildet.

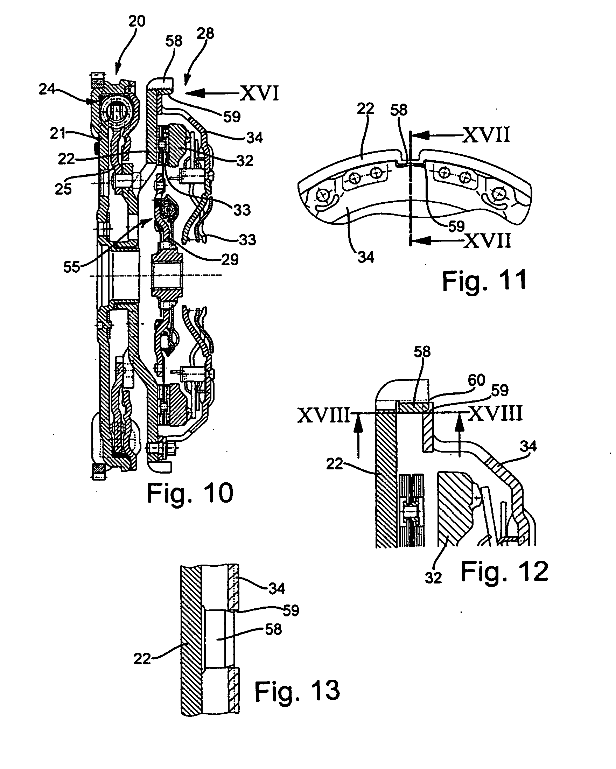

In Figur 10 ist eine Kupplung 28 mit integriertem nicht erfindungsgemäßen Drehschwingungsdämpfer 20 dargestellt. Die in Figur 10 dargestellte Ausgestaltung ähnelt der in Figur 1 dargestellten Ausführungsform. Um Wiederholungen zu vermeiden, wird auf die vorangegangene Beschreibung der Figur 1 verwiesen. Zur Bezeichnung gleicher Teile werden gleiche Bezugszeichen verwendet. Im Folgenden wird nur auf die Unterschiede zwischen den beiden Ausführungsformen eingegangen.

Bei der in Figur 10 dargestellten Ausgestaltung ist die Kupplungsscheibe 29 mit einer zusätzlichen Dämpfungseinrichtung 55 ausgestattet. Außerdem ist das Sekundärschwungrad 22 als Stanzteil aus Metallblech ausgebildet, und nicht als Gussteil wie bei der in Figur 1 dargestellten Ausführungsform.

In Zusammenschau mit der Schnittdarstellung der Figur 11 sieht man, dass der äußere Rand der im Wesentlichen kreisringscheibenförmigen sekundären Schwungscheibe 22 zum Kupplungsdeckel 34 hin umgebogen ist. In dem umgebogenen Rand ist eine Anprägung beziehungsweise Nase 58 ausgebildet, die in eine Kerbe 59 greift, die am äußeren Rand des Kupplungsdeckels 34 vorgesehen ist. Durch das Zusammenwirken zwischen Nase 58 und Kerbe 59 kann der Kupplungsdeckel 34 bei der Montage relativ zu dem sekundären Schwungrad 22 positioniert und zentriert werden.

In den Figuren 12 und 13 ist ein Ausschnitt aus Figur 10 in verschiedenen Ansichten beim Vorzentrieren dargestellt. Wie man in Figur 12 sieht, ist an der Nase 58 eine Vorzentrierschräge 60 ausgebildet, an der bei der Montage die Kerbe 59 des Kupplungsdeckels 34 zur Anlage kommt. Dadurch wird der Kupplungsdeckel 34 relativ zu der sekundären Schwungscheibe 22 vorzentriert.

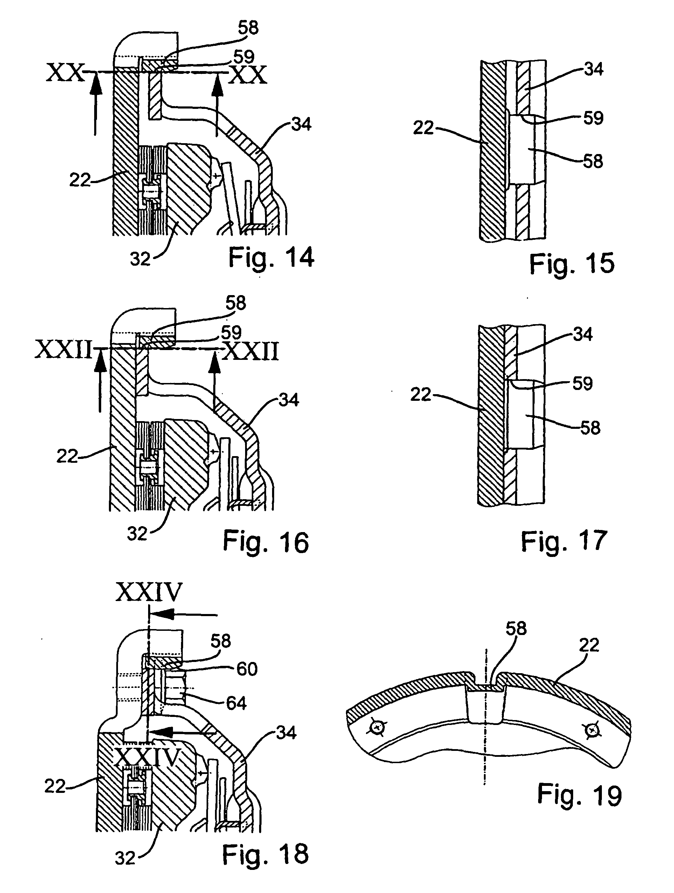

In den Figuren 14 und 15 sind die gleichen Ansichten wie in den Figuren 12 und 13 beim Positionieren dargestellt. Beim Positionieren kommt der Kupplungsdeckel 34 im Bereich der Kerbe 59 an der Nase 58 des sekundären Schwungrads 22 zur Anlage. Dadurch wird der Kupplungsdeckel 34 relativ zu dem Schwungrad 22 positioniert.

In den Figuren 16 und 17 sind die gleichen Ansichten wie in den Figuren 12 bis 15 im positionierten Zustand dargestellt. Wie man in den Figuren 16 und 17 sieht, befindet sich der Kupplungsdeckel 34 mit seinem äußeren Rand in Anlage an dem sekundären Schwungrad 22. In den Figuren 12 bis 17 ist jeweils nur eine Nase und eine Kerbe dargestellt, es können jedoch mehrere Nasen und Kerben über den Umfang der sekundären Schwungscheibe 22 und der Kupplungsscheibe 34 verteilt angeordnet sein.

In Figur 18 ist ein Ausschnitt aus Figur 10 vergrößert dargestellt, in dem gezeigt ist, wie der Kupplungsdeckel 34 mit Hilfe einer Schraube 64 an dem sekundären Schwungrad 22 befestigt ist. Zur Befestigung des Kupplungsdeckels 34 an dem sekundären Schwungrad 22 werden zweckmäßigerweise mehrere Schrauben 64 verwendet, die gleichmäßig über den Umfang des sekundären Schwungrads 22 verteilt eingeschraubt werden.

In Figur 19 ist ein Schnitt entlang der Linie XXIV - XXIV in Figur 18 dargestellt, der jedoch nur die Schwungscheibe 22 ohne Kupplung zeigt. Die Kupplung wird über die Kerbe 59 an dem Kupplungsdeckel 34 und die Positionieranprägung 58 an der sekundären Schwungscheibe 22 zentriert. Die Position des Verschraubungslochbildes am Umfang kann durch eine Kerbepaarung oder durch Gewindezapfen gewährleistet werden. Durch die erfindungsgemäße Zentrierungs- und Positionierungsmethode können die herkömmlicher Weise verwendeten drei Stifte entfallen. Die sekundäre Schwungscheibe 22 ist werkzeugfallend aus Metallblech gebildet.

### Bezugszeichenliste

- 20: Drehschwingungsdämpfer
- 21: Primäres Schwungrad
- 22: Sekundäres Schwungrad
- 23: -
- 24: Energiespeicherelemente
- 25: Flansch
- 26: Nietverbindungen
- 27: Ausläufer
- 28: Kupplung
- 29: Kupplungsscheibe
- 30: Reibbeläge
- 31: -
- 32: Druckplatte
- 33: Tellerfedereinrichtung
- 34: Kupplungsdeckel
- 41: Vorzentrierstufe
- 43: Vertiefung
- 44: Erhöhung
- 45: -
- 46: Schraubenloch
- 47: Schraubenschaft
- 48: Schraubenkopf
- 49: Durchgangsloch
- 50: Gewindezapfen
- 51: Gewindezapfen
- 52: Dämpfungseinrichtung
- 53: Nase
- 54: Kerbe
- 55: Zusätzliche Dämpfungseinrichtung
- 58: Nase
- 59: Kerbe
- 64: Schraube

## Patentansprüche

1. Drehschwingungsdämpfer mit einer Kupplung, insbesondere geteiltes Schwungrad, mit einer primären Schwungmasse (21), die mit der Abtriebswelle einer Brennkraftmaschine koppelbar ist, und mit einer sekundären- Schwungmasse (22), welche die Gegendruckplatte der Kupplung bildet, die eine Kupplungsscheibe (29), eine Druckplatte und einen Kupplungsdeckel (34) aufweist, wobei die Kupplungsscheibe zwischen der Gegendruckplatte (22) und der Druckplatte (32) einklemmbar ist und relativ zum Kupplungsdeckel (34) in axialer Richtung bewegbar und mit einer Getriebeeingangswelle koppelbar ist, wobei an der Gegendruckplatte (22) und am Kupplungsdeckel (34) Löcher (46, 49) zur Aufnahme von Befestigungsmitteln (47, 48) vorgesehen sind, wobei an dem Kupplungsdeckel (34) radial außen eine umlaufende Vorzentrierstufe (41) ausgebildet ist, die bei der Montage teilweise an der Gegendruckplatte (22) zur Anlage kommt, **dadurch gekennzeichnet, dass** an einem Umfangsrand des Kupplungsdeckels (34) radial innen mindestens eine Erhöhung (44) ausgebildet ist, die im zusammengebauten Zustand in eine Vertiefung (43) eingreift, die radial außen an der Gegendruckplatte (22) ausgebildet ist.

2. Drehschwingungsdämpfer nach Anspruch 1, **dadurch gekennzeichnet, dass** sich mindestens eines der Löcher in einem Zapfen (49) fortsetzt, der von der Gegendruckplatte (22) in ein Durchgangsloch (51) ragt, das in dem Kupplungsdeckel (34) zur Aufnahme der Befestigungsmittel (47, 48) vorgesehen ist.

3. Drehschwingungsdämpfer nach Anspruch 1, **dadurch gekennzeichnet, dass** die Primärschwungmasse (21) und die Sekundärschwungmasse (22) über Energiespeicher (24) miteinander gekoppelt sind, wobei die Sekundärschwungmasse (22) Bereiche zur axialen Anlage des äußeren Randes eines Kupplungsdeckels (34) aufweist sowie Bereiche zur Befestigung eines Flansches (25), wobei die Sekundärschwungmasse (22) werkzeugfallend aus Metallblech hergestellt ist.

4. Drehschwingungsdämpfer nach Anspruch 3, **dadurch gekennzeichnet, dass** die Sekundärschwungmasse (22) als Stanzteil aus Metallblech ausgebildet ist.

5. Drehschwingungsdämpfer nach Anspruch 3 oder 4, **dadurch gekennzeichnet, dass** die Sekundärschwungmasse (22) Schraubenlöcher (46) aufweist zur Befestigung des Kupplungsdeckels (34).

6. Drehschwingungsdämpfer nach einem der Ansprüche 3 bis 5, **dadurch gekennzeichnet, dass** die Sekundärschwungmasse (22) Zapfen (51, 58) angeformt hat, die in Ausnehmungen (49. 59) des Kupplungsdeckels ragen, wodurch der Kupplungsdeckel (34) relativ zu der Sekundärschwungmasse (22) positioniert wird.

7. Drehschwingungsdämpfer nach einem der Ansprüche 3 bis 6, **dadurch gekennzeichnet, dass** der Flansch (25) mit der Sekundärschwungmasse (22) über Nietverbindungen (26) gekoppelt ist.

8. Drehschwingungsdämpfer nach einem der Ansprüche 3 bis 7, **dadurch gekennzeichnet, dass** das Sekundärschwungrad (22) im Randbereich axial umgebogen ist.

9. Drehschwingungsdämpfer nach Anspruch 8. **dadurch gekennzeichnet, dass** die Sekundärschwungmasse (22) und der Kupplungsdeckel (34) mittels der axial umgebogenen Randbereiche zueinander positioniert sind.

## Claims

1. Torsional vibration damper having a clutch, in particular a split flywheel, having a primary flywheel mass (21) which can be coupled to the output shaft of an internal combustion engine, and having a secondary flywheel mass (22) which forms the counterpressure plate of the clutch which has a clutch plate (29), a pressure plate and a clutch cover (34), it being possible for the clutch plate to be clamped between the counterpressure plate (22) and the pressure plate (32) and to be moved in the axial direction relative to the clutch cover (34) and to be coupled to a transmission input shaft, holes (40, 49) for receiving fastening means (47, 48) being provided on the counterpressure plate (22) and on the clutch cover (34), a circumferential pre-centring step (41) which comes into contact partially with the counterpressure plate (22) during mounting being formed on the clutch cover (34) radially on the outside, **characterized in that** at least one elevation (44) is formed on a circumferential edge of the clutch cover (34) radially on the inside, which elevation (44) engages, in the assembled state, into a depression (43) which is formed on the counterpressure plate (22) radially on the outside.

2. Torsional vibration damper according to Claim 1, **characterized in that** at least one of the holes is continued in a journal (49) which protrudes from the counterpressure plate (22) into a through hole (51) which is provided in the clutch cover (34) for receiving the fastening means (47, 48).

3. Torsional vibration damper according to Claim 1, **characterized in that** the primary flywheel mass (21) and the secondary flywheel mass (22) are coupled to one another via energy stores (24), the secondary flywheel mass (22) having regions for axial contact of the outer edge of a clutch cover (34) and regions for fastening a flange (25), the secondary flywheel mass (22) being produced from metal sheet in an off-tool manner.

4. Torsional vibration damper according to Claim 3, **characterized in that** the secondary flywheel mass (22) is formed as a punched part from metal sheet.

5. Torsional vibration damper according to Claim 3 or 4, **characterized in that** the secondary flywheel mass (22) has screw holes (46) for fastening the clutch cover (34).

6. Torsional vibration damper according to one of Claims 3 to 5, **characterized in that** the secondary flywheel mass (22) has integrally formed journals (51, 58) which protrude into recesses (49, 59) of the clutch cover, as a result of which the clutch cover (34) is positioned relative to the secondary flywheel mass (22).

7. Torsional vibration damper according to one of Claims 3 to 6, **characterized in that** the flange (25) is coupled to the secondary flywheel mass (22) via rivet connections (26).

8. Torsional vibration damper according to one of Claims 3 to 7, **characterized in that** the secondary flywheel (22) is bent over axially in the edge region.

9. Torsional vibration damper according to Claim 8, **characterized in that** the secondary flywheel mass (22) and the clutch cover (34) are positioned with respect to one another by means of the axially bent-over edge regions.

## Revendications

1. Amortisseur de vibrations torsionnelles comprenant un embrayage, en particulier une roue volante divisée, comprenant une masse d'inertie primaire (21) qui peut être accouplée à l'arbre de sortie d'un moteur à combustion interne, et comprenant une masse d'inertie secondaire (22), qui forme la plaque de contrepression de l'embrayage, qui présente un disque d'embrayage (29), une plaque de pression et un couvercle d'embrayage (34), le disque d'embrayage pouvant être serré entre la plaque de contrepression (22) et la plaque de pression (32) et pouvant être déplacé par rapport au couvercle d'embrayage (34) dans la direction axiale et pouvant être accouplé à un arbre d'entrée de transmission, des trous (46, 49) pour recevoir des moyens de fixation (47, 48) étant prévus sur la plaque de contrepression (22) et sur le couvercle d'embrayage (34), un étage de pré-centrage (41) périphérique étant réalisé radialement à l'extérieur sur le couvercle d'embrayage (34), lequel étage vient en appui en partie contre la plaque de contrepression (22) lors du montage, **caractérisé en ce que** sur un bord périphérique du couvercle d'embrayage (34), au moins un rehaussement (44) est réalisé radialement à l'intérieur, lequel vient en prise dans l'état assemblé dans un renfoncement (43), qui est réalisé radialement à l'extérieur sur la plaque de contrepression (22).

2. Amortisseur de vibrations torsionnelles selon la revendication 1, **caractérisé en ce qu'**au moins l'un des trous se prolonge par un tourillon (49) qui pénètre depuis la plaque de contrepression (22) dans un trou traversant (51), qui est prévu dans le couvercle d'embrayage (34) pour recevoir les moyens de fixation (47, 48).

3. Amortisseur de vibrations torsionnelles selon la revendication 1, **caractérisé en ce que** la masse d'inertie primaire (21) et la masse d'inertie secondaire (22) sont accouplées l'une à l'autre par le biais d'accumulateurs d'énergie (24), la masse d'inertie secondaire (22) présentant des régions pour l'appui axial du bord extérieur d'un couvercle d'embrayage (34) ainsi que des régions pour la fixation d'une bride (25), la masse d'inertie secondaire (22) étant fabriquée sans outil en tôle métallique.

4. Amortisseur de vibrations torsionnelles selon la revendication 3, **caractérisé en ce que** la masse d'inertie secondaire (22) est réalisée sous forme de pièce estampée en tôle métallique.

5. Amortisseur de vibrations torsionnelles selon la revendication 3 ou 4, **caractérisé en ce que** la masse d'inertie secondaire (22) présente des trous de vis (46) pour la fixation du couvercle d'embrayage (34).

6. Amortisseur de vibrations torsionnelles selon l'une quelconque des revendications 3 à 5, **caractérisé en ce que** la masse d'inertie secondaire (22) présente des tourillons (51, 58) façonnés, qui pénètrent dans des évidements (49, 59) du couvercle d'embrayage, de sorte que le couvercle d'embrayage (34) soit positionné par rapport à la masse d'inertie secondaire (22).

7. Amortisseur de vibrations torsionnelles selon l'une quelconque des revendications 3 à 6, **caractérisé en ce que** la bride (26) est accouplée à la masse d'inertie secondaire (22) par le biais de connexions rivetées (26).

8. Amortisseur de vibrations torsionnelles selon l'une quelconque des revendications 3 à 7, **caractérisé en ce que** la masse d'inertie secondaire (22) est cintrée axialement dans la région du bord.

9. Amortisseur de vibrations torsionnelles selon la revendication 8, **caractérisé en ce que** la masse d'inertie secondaire (22) et le couvercle d'embrayage (34) sont positionnés l'un par rapport à l'autre au moyen des régions de bord cintrées axialement.
